(19) Europäisches Patentamt
European Patent Office
Office européen des brevets

(11) **EP 0 848 829 B1**

(12) **EUROPÄISCHE PATENTSCHRIFT**

(45) Veröffentlichungstag und Bekanntmachung des Hinweises auf die Patenterteilung:
**19.05.1999 Patentblatt 1999/20**

(21) Anmeldenummer: **96937998.1**

(22) Anmeldetag: **06.09.1996**

(51) Int Cl.⁶: **G01S 13/34**

(86) Internationale Anmeldenummer:
**PCT/DE96/01673**

(87) Internationale Veröffentlichungsnummer:
**WO 97/09637 (13.03.1997 Gazette 1997/12)**

(54) **VORRICHTUNG ZUR ABSTANDSMESSUNG**

RANGEFINDER

DISPOSITIF DE TELEMETRIE

(84) Benannte Vertragsstaaten:
**CH DE FR GB IT LI NL SE**

(30) Priorität: **07.09.1995 DE 19533124**

(43) Veröffentlichungstag der Anmeldung:
**24.06.1998 Patentblatt 1998/26**

(73) Patentinhaber: **SIEMENS AKTIENGESELLSCHAFT**
**80333 München (DE)**

(72) Erfinder: **MAGORI, Valentin**
**D-81539 München (DE)**

(56) Entgegenhaltungen:
**CH-A- 652 832          US-A- 5 164 734**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Abstandsmessung.

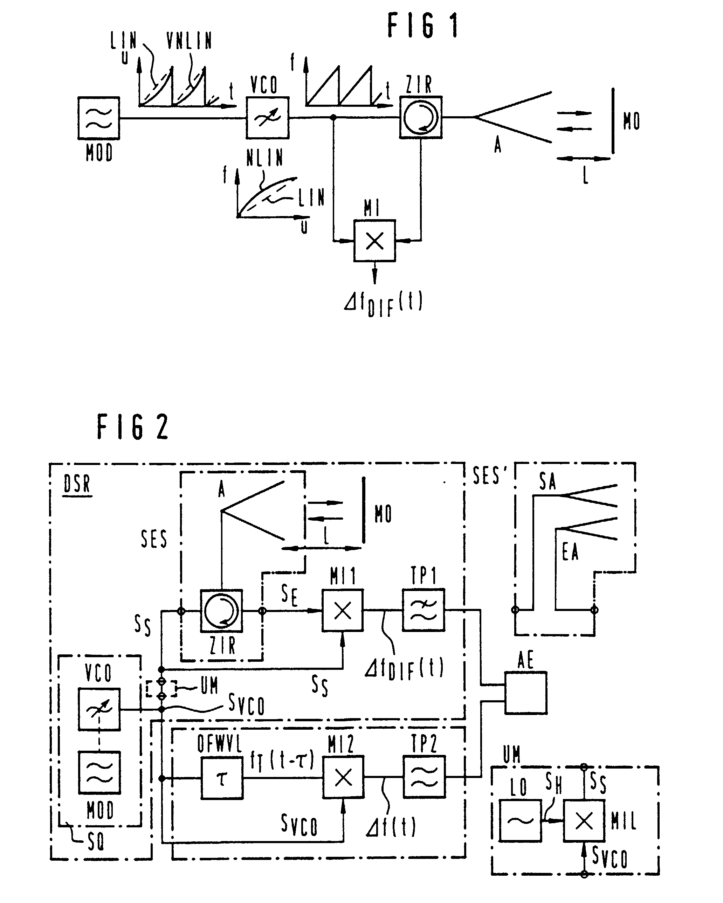

Aus dem Stand der Technik Meinke, Gundlach, Taschenbuch der Hochfrequenztechnik, 5. Auflage, Springer-Verlag, Kapitel S 3 ist ein Dauerstrichradar, das auch als FMCW-Radar bezeichnet wird, bekannt. Die Abkürzung FM steht für Frequenzmodulation und CW für Continuous Wave. In Figur 1 ist ein derartiges Dauerstrichradar gezeigt. Ein Modulator MOD erzeugt ein modulierendes Signal, das einen spannungsgesteuerten Oszillator VCO zugeführt wird. Am Ausgang des spannungsgesteuerten Oszillators VCO sollte ein möglichst linear frequenzmoduliertes Signal anliegen. Sofern die Frequenz-Spannnungs-Kennlinie des spannungsgesteuerten Oszillators VCO eine Nichtlinearität aufweist, im f-u-Diagramm mit NLIN bezeichnet, ist das vom Modulator MOD stammende modulierende Signal entsprechend vorzuverzerren, wie im u-t-Diagramm des Modulators MOD mit dem Signalverlauf VNLIN angedeutet ist. Falls der spannungsgesteuerte Oszillator VCO eine lineare Kennlinie LIN aufweist, ist für den Modulator MOD eine lineare Kennlinie zu wählen. Das vom spannungsgesteuerten Oszillator VCO stammende linear frequenzmodulierte Signal wird über einen Zirkulator ZIR geführt und von einer Antenne A abgestrahlt. Das abgestrahlte Signal wird von einem im Abstand L zur Antenne A befindlichen Meßobjekt MO reflektiert und von der Antenne A empfangen. Dieses empfangene Signal gelangt über den Zirkulator ZIR auf einen Mischer MI, der dieses empfangene Signal mit dem gerade vorhandenen Sendesignal mischt. Die sich ergebende Differenzfrequenz $\Delta f_{DIF}(t)$ ist ein Maß für den Abstand L des Meßobjektes MO von der Antenne A. Falls jedoch das von dem spannungsgesteuerten Oszillator VCO stammende frequenzmodulierte Sendesignal keine lineare f-t-Kennlinie aufweist, kommt es zu Meßfehlern.

Eine Korrektur der Nichtlinearität in der f-u-Kennlinie des spannungsgesteuerten Oszillators VCO ist nicht immer möglich oder mit einem hohen Aufwand verbunden.

In der CH 652 832 A5 ist ein Impulsradargerät beschrieben, bei dem ein Leistungssignal von einer Antenne ausgestrahlt und wieder empfangen wird. Das von der Antenne empfangene, an einem Ziel reflektierte Signal gelangt über einen Mischer, in dem es mit dem Ausgangssignal eines Lokaloszillators gemischt wird, zum Eingang des Zwischenfrequenzverstärkers, dessen Ausgangssignal in einer Signalverarbeitungsstufe ausgewertet wird. Die Laufzeit des Signales von der Antenne zum Ziel und zurück zur Antenne wird mit Hilfe einer Verzögerungsschaltung simuliert, die ein Oberflächenwellenbauelement enthält. Zu diesem Zweck wird rechnergesteuert periodisch von dem Empfangssignal auf ein zeitverzögertes Eichsignal dieser Verzögerungsleitung umgeschaltet, das einem bestimmten Abstand eines fiktiven Zieles entspricht. Aus diesem zeitverzögerten Eichsignal leitet der Rechner der Signalverarbeitungsstufe einen Zielabstand ab, der zufolge der in der Vorrichtung auftretenden unerwünschten Laufzeitverzögerungen fehlerbehaftet ist und mit dem theoretischen Abstand verglichen werden kann, um so zu einer Eichung des Radargerätes zu gelangen.

Aufgabe der Erfindung ist es, eine Vorrichtung und ein Verfahren zur Abstandsmessung anzugeben, bei der eine gegebenenfalls vorhandene Nichtlinearität im frequenzmodulierten Ausgangssignal des spannungsgesteuerten Oszillators ohne Einfluß auf die Meßgenauigkeit bleibt.

Die Aufgabe wird durch eine Vorrichtung und ein Verfahren gemäß den unabhängigen Patentansprüchen gelöst.

Wenn die Isolation des Zirkulators zu niedrig ist, kann eine weitere Antenne vorgesehen sein, die zum Empfang des reflektierten Signals dient.

Falls vermieden werden soll, daß die Sendeleistung auch am Mischer anliegt, kann ein Zirkulator zwischen die Signalquelle den Mischer und die Antenne geschaltet werden.

Die Ausführung gemäß Anspruch 4 hat den Vorteil, daß ein Großteil der Sensorkomponenten in einem bezogen auf die Sendefrequenz niederfrequenteren Bereich betrieben werden kann. Dieser ist in der Praxis handhabbarer.

Die Weiterbildung gemäß Anspruch 9 dient der Unterdrückung von Störquellen. Zusätzliche benachbarte Vorrichtungen zur Abstandsmessung können mit dieser Weiterbildung voneinander unterschieden werden.

Die Erfindung wird im folgenden anhand mehrerer Figuren näher erläutert.

Figur 1      zeigt ein Dauerstrichradar, wie es aus dem Stand der Technik bekannt ist.

Figur 2      zeigt den prinzipiellen Aufbau der erfindungsgemäßen Vorrichtung zur Abstandsmessung.

Figur 3      zeigt eine weitere Ausgestaltungsform der erfindungsgemäßen Vorrichtung zur Abstandsmessung.

Die erfindungsgemäße Vorrichtung zur Abstandsmessung weist gemäß Figur 2 eine Signalquelle SQ auf, die einen Modulator MOD und einen spannungsgesteuerten Oszillator VCO beinhaltet. Der spannungsgesteuerte Oszillator VCO erzeugt ein nicht notwendigerweise linear frequenzmoduliertes Signal $S_{VCO}$ mit der Frequenz $f_{VCO}(t)$ :

$$f_{VCO}(t) = f_c + \dot{\omega} \cdot t$$

lineares Durchstimmen:

$$\dot{\omega} = \frac{\Delta f_c}{T} \qquad \text{für } 0 < t < T$$

wobei:

$f_c$ = Trägerfrequenz
$\dot{\omega}$ = Änderung der Frequenz in Abhängigkeit von der Zeit
$\Delta f_c$ = Frequenzhub
$T$ = Periode eines Durchstimmvorgangs

Im folgenden wird der in Figur 2 rechts unten gezeigte Umsetzer UM nicht verwendet. Deshalb gilt: Das Sendesignal $S_S$ mit der Augenblicksfrequenz $f_T(t)$, das am Eingang des Zirkulators ZIR anliegt ist gleich dem Signal mit der Frequenz $f_{VCO}(t)$, das heißt: $f_T(t) = f_{VCO}(t)$ und $S_{VCO} = S_S$. Dieses frequenzmodulierte Signal mit der Augenblicksfrequenz $f_T(t)$ liegt an einer Sende-/Empfangsstufe SES, die den Zirkulator ZIR und eine Antenne A aufweist, an. Das von der Antenne A abgestrahlte Signal und an dem Meßobjekt MO reflektierte Signal wird von der Antenne A empfangen und über den Zirkulator ZIR zu einem ersten Mischer MI1 geführt. An diesem ersten Mischer MI1 liegt zusätzlich das Sendesignal $S_S$ mit der Augenblicksfrequenz $f_T(t)$ an. Die von dem ersten Mischer MI1 gebildete Differenzfrequenz $\Delta f_{DIF}(t)$ aus den beiden Frequenzen $f_T(t-t_L)$ und $f_T(t)$ wird über einen ersten Tiefpaß TP1 einer Auswerteinheit AE zugeführt. Dieser als Dauerstrichradar DSR oder auch als Meßzweig bezeichneten Einheit ist eine Referenzeinheit REF, auch als Referenzzweig bezeichnet, nebengeordnet. Der Referenzeinheit REF wird das von dem spannungsgesteuerten Oszillator VCO erzeugte frequenzmodulierte Signal $S_{VCO}$ mit der Augenblicksfrequenz $f_T(t)$ ($=f_{VCO}(t)$) zugeführt. Die Referenzeinheit REF weist ein Oberflächenwellenelement OFW auf, das das frequenzmodulierte Signal um die Zeitdauer $\tau$ verzögert an einen zweiten Mischer MI2 weiterleitet. Dieser bildet die Differenzfrequenz $\Delta f(t)$ aus den beiden Frequenzen $f_T(t-\tau)$ und $f_T(t)$. Sowohl die Differenzfrequenz $\Delta f_{DIF}(t)$, die von dem Dauerstrichradar DSR stammt, als auch die Differenzfrequenz $\Delta f(t)$, die von der Referenzeinheit REF stammt, werden auf die Auswerteinheit AE geführt. Die Phasenverschiebung $\varphi_{DSR}$ am Ausgang des Dauerstrichradars DSR ergibt sich zu:

$$\varphi_{DSR}(t) = \frac{t_L \cdot \Delta f_{DIF}(t)}{2\pi} \qquad (1)$$

wobei:

$t_L$ = Signallaufzeit auf der Meßstrecke

Die Phasenverschiebung $\varphi_{REF}$ am Ausgang der Referenzeinheit REF ergibt sich zu:

$$\varphi_{REF}(t) = \tau \cdot \frac{\Delta f(t}{2\pi} \qquad (2)$$

wobei:

$\tau$ = Verzögerungsdauer der Verzögerungsleitung

Zwischen den Signalen im Referenzzweig REF und den Signalen im Meßzweig DSR bestehen folgende Zusammenhänge:

Die Verzögerungsdauer $\tau$ bezogen auf die Differenzfrequenz $\Delta f(t)$ am Ausgang des zweiten Mischers MI2 ist gleich der Signallaufzeit $t_L$ bezogen auf die Differenzfrequenz $\Delta f_{DIF}(t)$ am Ausgang des ersten Mischers MI1. Die Signallaufzeit $t_L$ ergibt sich demnach zu:

$$t_L = \frac{\varphi_{DSR}(t)}{\varphi_{REF}(t)} \cdot \tau \qquad (3)$$

Die Signallaufzeit $t_L$ auf der Meßstrecke ergibt sich aus den gemessenen Phasenverläufen auf dem Meßzweig DSR und dem Referenzzweig REF und aus der genau bekannten Verzögerungsdauer $\tau$ des Oberflächenwellenelements OFW. Diese Beziehung ist durch Mikroprozessoren, insbesondere digitalen Signalprozessoren, in der Auswerteinheit AE auswertbar. Die Auswertung kann auf verschiedene Weisen erfolgen:

**1. Möglichkeit:**

Aus dem vom zweiten Mischer MI2 stammenden Signal mit der Differenzfrequenz $\Delta f(t)$ zwischen Ein- und Ausgangssignal des Referenzzweigs kann dessen Frequenzkennlinie in Abhängigkeit von der Zeit ermittelt werden. Da der Verlauf des vom ersten Mischer MI1 stammenden Signals mit der Differenzfrequenz $\Delta f_{DIF}(t)$ der gleichen Kennlinie folgt, kann so ein Mischsignal für einen beliebig veränderlichen Meßobjektabstand L synthetisiert werden. Durch einen Vergleich der so berechneten Signale mit dem der Meßstrecke kann durch Korrelation oder Auswertung nach dem kleinsten Fehlerquadrat zwischen den beiden Signalen derjenige Abstand L gefunden werden, für den sich die beste Übereinstimmung zwischen den Signalen ergibt. Das bedeutet, daß der tatsächliche Objektabstand dem Wert für den Abstand L bei bester Übereinstimmung entspricht.

Bei mehreren detektierten Objekten ergibt sich eine Übereinstimmung bzw. eine beste Ähnlichkeit für mehrere Abstände.

**2. Möglichkeit:**

Beim Durchstimmen (Sweep) der Signalquelle SQ ergibt sich im Referenzzweig REF als Signal mit der Differenzfrequenz $\Delta f(t)$ ein quasi periodisches Signal mit (bei langer Verzögerungsdauer $\tau$) vielen Perioden. Aus diesem Signal werden bei bestimmten Phasenwinkeln (vorzugsweise Nulldurchgängen) Abtastimpulse erzeugt, welche die Zeitpunkte vorgeben, zu denen das vom Meßzweig DSR stammende Signal mit der Differenzfrequenz $\Delta f_{DIF}(t)$ abgetastet wird. Die abgetasteten Werte werden digitalisiert und mit den Zeitpunkten des Auftretens der Abtastwerte in einen Speicher geladen. Als Speicherinhalt ergibt sich derselbe Signalverlauf, der sich bei zeitlinearer Frequenzmodulation bei konstanter Abtast- und Einleserate ergeben hätte. Beim Auslesen des Speichers mit konstanter Taktrate ergibt sich dementsprechend ein Signal, wie es sich auch bei einer linearen Frequenzmodulation (FM) ergeben hätte.

Bei einer analogen Speicherung z.B. in einem Eimerkettenspeicher würde ein analoges Vorgehen zu analogen Resultaten führen.

### 3. Möglichkeit:

Weiterhin kann das Meß- und auch das Referenzsignal mit konstanter Abtastrate in einen Speicher gelesen werden. Aus dem gespeicherten Referenzsignal werden Zeitpunkte mit vorgegebenen Phasenwinkeln (vorzugsweise Nulldurchgängen, d.h. 180°) berechnet. Zu genau diesem Zeitpunkten werden die dazugehörigen Werte der Meßwerte ausgelesen. Werden diese Werte mit konstanter Taktrate ausgelesen, dann ergibt sich ein Signal, wie es sich bei exakt linearer Frequenzmodulation ergeben hätte.

Die Weiterverarbeitung der so erhaltenen Signale kann dann auch mit denjenigen Verfahren durchgeführt werden, wie sie zur Bearbeitung der Signale bei einer exakt linear frequenzmodulierten Signalquelle SQ verwendet werden.

Ein Umsetzer UM, wie er in Figur 2 unten rechts gezeigt ist, kann an der in Figur 2 links mit UM gekennzeichneten Stelle eingefügt werden. Der Umsetzer UM weist einen lokalen Oszillator LO auf, der ein Signal $S_H$ mit einer Frequenz $f_H$ erzeugt, die höher als die Frequenz $f_{VCO}(t)$ ist, die vom spannungsgesteuerten Oszillator VCO stammt. Dieses Signal $S_H$ mit der Frequenz $f_H(t)$ wird mit dem vom spannungsgesteuerten Oszillator VCO stammenden Signal an einem Mischer MIL hochgemischt. Das Empfangssignal wird mit dem Sendesignal homodyn in das Basisband heruntergemischt. Der Referenzzweig REF wird bei der Zwischenfrequenz betrieben, bei der der spannungsgesteuerte Oszillator VCO das frequenzmodulierte Signal mit der Frequenz $f_{VCO}(t)$ erzeugt.

Für die Sende-/Empfangsstufe SES des Meßzweigs DSR kann sowohl eine monostatische Anordnung SES, als auch eine bistatische Antennenanordnung SES' verwendet werden. Bei der monostatische Anordnung SES werden das Sende- und Empfangssignal nach der gemeinsamen Sende- und Empfangsantenne SA durch den Zirkulator ZIR oder einen Richtkoppler getrennt. Bei der bistatischen Antennenanordnung SES' ist eine Sendeantenne SA und einer Empfangsantenne EA vorgesehen.

Sofern eine Abtastung des Meßsignals bei jeder Nullstelle des Referenzsignals erfolgt, muß sowohl für die direkte Abtastung als auch für die rechnerische Abtastung die Verzögerungsdauer $\tau$ mindestens solange wie die Signallaufzeit $t_L$ sein, um das Abtasttheorem nach Shannon zu erfüllen.

Falls andere Auswerteverfahren gewählt werden, kann die Verzögerungsdauer $\tau$ auch kürzer als die maximale Signallaufzeit $t_L$ sein.

Die in Figur 2 gezeigten Mischer können, falls nur ein reales Signal benötigt wird, als einfache Mischer ausgeführt sein. Falls ein komplexes Signal benötigt wird, können die Mischer MI1, MI2 und MI3 sowohl im Meß- als auch im Referenzzweig als IQ-Mischer ausgeführt sein.

Komplexe Signale können auch mittels der Hilberttransformation rechnerisch aus dem realen Zeitsignal gewonnen werden. Auf IQ-Mischer kann dann verzichtet werden.

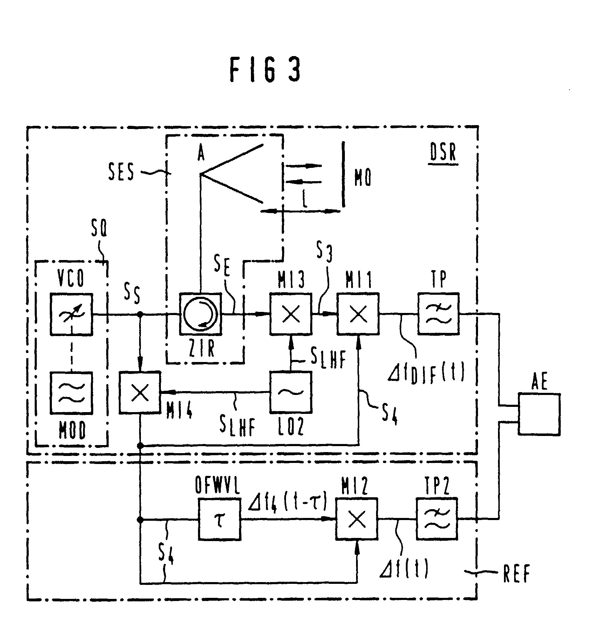

Die in Figur 3 gezeigte Vorrichtung zur Abstandsmessung unterscheidet sich von der in Figur 2 gezeigten Vorrichtung zur Abstandsmessung dadurch, daß die Signalquelle SQ ein frequenzmoduliertes Signal $S_{VCO} = S_S$ mit der Augenblicksfrequenz $f_T(t)$ erzeugt, die hochfrequenter ist als die Frequenz $f_{LHF}(t)$ des von dem lokalen Oszillator LO2 stammenden Signals $S_{LHF}$. Das heißt, die Augenblicksfrequenz $f_T(t)$ des frequenzmodulierten Signal $S_S$ entspricht der Sendefrequenz. Die Mischer MI4 und MI3 mischen das frequenzmodulierte Sendesignal $S_S$ mit der Augenblicksfrequenz $f_T(t)$ beziehungsweise Empfangssignal $S_E$ mit der Augenblicksfrequenz $f_T(t-\tau)$ mit dem Signal $S_{LHF}$ der Frequenz $f_{LHF}(t)$ auf eine niedrigere Frequenz $\Delta f_4(t)$ beziehungsweise $\Delta f_3(t)$ herab. Die Frequenz $\Delta f_4(t)$ des Signals $S_4$ am Ausgang des vierten Mischers MI4 ist die Differenzfrequenz aus der Augenblicksfrequenz $f_T(t)$ und $f_{LHF}(t)$. Die Differenzfrequenz $\Delta f_3(t)$ des Signals $S_3$ am Ausgang des dritten Mischers MI3 ist die Differenzfrequenz aus den Frequenzen $f_T(t-t_L)$ und $f_{LHF}(t)$.

In der in Figur 3 gezeigten Ausführungsform kann die Sende-/Empfangsstufe SES durch eine bistatische Sende-/Empfangsstufe SES' gemäß Figur 2 ersetzt werden. Dies hat den Vorteil, daß die Dämpfung zwischen Signalquelle SQ und Mischer ME3 erhöht wird. Weiterhin kann dadurch die Sendeleistung erhöht werden.

Der spannungsgesteuerte Oszillator VCO erzeugt das frequenzmodulierte Signal im Ausgangsfrequenzbereich des Meßzweigs DSR. Sowohl das Sende-, als auch das Empfangssignal des Meßzweigs DSR werden mit demselben lokalen Oszillator LO2 auf die Zwischenfrequenz (ZF)-Ebene gemischt, bei der auch der Referenzzweig REF betrieben wird.

Die Mischer MI1 bis MI4 können einfache Mischer zur Erzeugung eines realen Signals oder auch IQ-Mischer zur Erzeugung eines komplexen Signals sein.

Komplexe Signale können auch mittels der Hilberttransformation rechnerisch aus dem realen Zeitsignal gewonnen werden.

Für eine Abtastung des Meßsignals bei jeder Nullstelle des Referenzsignals muß sowohl die direkte Abtastung, als auch für die rechnerische Abtastung die Verzögerungsdauer $\tau$ mindestens solange wie die Signallaufzeit $t_L$ sein, um das Abtasttheorem zu erfüllen.

Die Auswertung des Meßsignals und des Referenzsignals in der Auswerteeinheit AE kann auf die selbe Art und Weise erfolgen, wie sie unter der ersten Ausführungsform gemäß Figur 2 beschrieben ist.

Bei der in Figur 3 gezeigten Ausführungsform liegt die mittlere Augenblicksfrequenz $f_T(t)$ typischer Weise bei 24 GHz. Der lokale Oszillator LO2 erzeugt ein Signal der Frequenz $f_{LHF}(t) = 21,5$ GHz. Selbstverständlich ist die Anordnung nicht auf diese Frequenzen beschränkt.

Bei gleichzeitigem Betrieb mehrerer Abstandsmeßvorrichtungen durch mehrere Benutzer können sich Probleme ergeben. Strahlt eine erste Abstandsmeßvorrichtung in den Empfangsbereich einer zweiten Abstandsmeßvorrichtung, so führt dies zu Störungen, welche auch in den Nebenkeulen stärkere Empfangspegel erzielen, als die vergleichsweise schwachen Radarechos. Zur Unterdrückung dieser Störungen kann ein willkürlich gewählter irregulärer Modulationssignalverlauf vorgegeben werden.

Weitere Möglichkeiten zur Verbesserung der Störsicherheit sind:

1. Das vom Modulator MOD stammende Modulationssignal kann nach einem festen Muster verändert werden.

2. Das vom Modulator MOD stammende Modulationssignal kann mit Hilfe eines Zufallsgenerators verändert werden.

3. Es kann die Umschaltung des Verlaufs der modulierenden Spannung nach "Absprache" mit dem Störsender, der seinerseits ebenfalls gestört wird, vorgenommen werden. Geeignete Funktionen für unterschiedliche Benutzer sind solche, die möglichst wenig miteinander korrelieren.

## Patentansprüche

1. Vorrichtung zur Abstandsmessung,

 - bei der eine Signalquelle (SQ) zur Erzeugung eines frequenzmodulierten Signals vorhanden ist,
 - bei der eine Sende-/Empfangsstufe (SES) und ein erster Mischer (MI1) vorhanden sind,

 - bei der dieser erste Mischer so angeordnet ist, daß er ein von der Sende-/Empfangsstufe kommendes Signal mit dem von der Signalquelle erzeugten Signal mischen kann,
 - bei der eine Referenzeinheit (REF) vorhanden ist, die ein Oberflächenwellenbauelement (OFW) und einen zweiten Mischer (MI2) umfaßt und die dafür vorgesehen ist, das von der Signalquelle kommende Signal zeitlich zu verzögern und mit dem unverzögerten Signal zu mischen,
 - bei der eine Auswerteeinheit (AE) vorhanden ist, die so angeordnet ist, daß ihr die von den Mischern gebildeten Signale zugeführt werden, und
 - bei der diese Auswerteeinheit dafür eingerichtet ist,
 - a) aus dem von dem zweiten Mischer stammenden Signal dessen Frequenzkennlinie in Abhängigkeit von der Zeit für beliebig vorgegebene Meßobjektabstände zu ermitteln und
 - b) durch einen Vergleich dieser Frequenzkennlinien mit einem von dem ersten Mischer stammenden Signal durch Korrelation oder Auswertung nach dem kleinsten Fehlerquadrat den Meßobjektabstand bester Übereinstimmung zu bestimmen.

2. Vorrichtung zur Abstandsmessung,

 - bei der eine Signalquelle (SQ) zur Erzeugung eines frequenzmodulierten Signals vorhanden ist,
 - bei der eine Sende-/Empfangsstufe (SES) und ein erster Mischer (MI1) vorhanden sind,
 - bei der dieser erste Mischer so angeordnet ist, daß er ein von der Sende-/Empfangsstufe kommendes Signal mit dem von der Signalquelle erzeugten Signal mischen kann,
 - bei der eine Referenzeinheit (REF) vorhanden ist, die ein Oberflächenwellenbauelement (OFW) und einen zweiten Mischer (MI2) umfaßt und die dafür vorgesehen ist, das von der Signalquelle kommende Signal zeitlich zu verzögern und mit dem unverzögerten Signal zu mischen,
 - bei der eine Auswerteeinheit (AE) vorhanden ist, die so angeordnet ist, daß ihr die von den Mischern gebildeten Signale zugeführt werden, und
 - bei der diese Auswerteeinheit dafür eingerichtet ist,
 - a) zu Zeitpunkten bestimmter Phasenwinkel des von dem zweiten Mischer stammenden Signals ein von dem ersten Mischer stammendes Signal abzutasten,
 - b) die abgetasteten Werte zu digitalisieren und mit den Zeitpunkten des Auftretens der Abtastwerte zu speichern und

- c) durch Auslesen der Werte mit konstanter Taktrate ein Signal zu gewinnen, das sich bei einer linearen Frequenzmodulation ergeben hätte.

3. Vorrichtung zur Abstandsmessung,

- bei der eine Signalquelle (SQ) zur Erzeugung eines frequenzmodulierten Signals vorhanden ist,
- bei der eine Sende-/Empfangsstufe (SES) und ein erster Mischer (MI1) vorhanden sind,
- bei der dieser erste Mischer so angeordnet ist, daß er ein von der Sende-/Empfangsstufe kommendes Signal mit dem von der Signalquelle erzeugten Signal mischen kann,
- bei der eine Referenzeinheit (REF) vorhanden ist, die ein Oberflächenwellenbauelement (OFW) und einen zweiten Mischer (MI2) umfaßt und die dafür vorgesehen ist, das von der Signalquelle kommende Signal zeitlich zu verzögern und mit dem unverzögerten Signal zu mischen,
- bei der eine Auswerteeinheit (AE) vorhanden ist, die so angeordnet ist, daß ihr die von den Mischern gebildeten Signale zugeführt werden, und
- bei der diese Auswerteeinheit dafür eingerichtet ist,
- a) die von den Mischern stammenden Signale mit konstanter Abtastrate zu erfassen und zu speichern,
- b) Zeitpunkte mit vorgegebenen Phasenwinkeln des von dem zweiten Mischer stammenden Signales zu berechnen,
- c) zu diesen Zeitpunkten die dazugehörigen Werte des von dem ersten Mischer stammenden Signales zu ermitteln und
- d) durch Auslesen der Werte mit konstanter Taktrate ein Signal zu gewinnen, das sich bei einer linearen Frequenzmodulation ergeben hätte.

4. Vorrichtung nach einem der Ansprüche 1 bis 3,

bei der zwischen der Signalquelle und der Sende-/Empfangsstufe ein lokaler Oszillator (LO) und ein weiterer Mischer (MIL) vorhanden sind, bei der der lokale Oszillator ein Signal mit einer Frequenz erzeugt, die höher ist als die von der Signalquelle stammende Frequenz, und bei der der weitere Mischer dafür vorgesehen ist, das Signal der Signalquelle mit dem Signal des lokalen Oszillators zu mischen.

5. Verfahren zur Abstandsmessung,

- bei dem ein frequenzmoduliertes Signal erzeugt wird,
- bei dem das erzeugte Signal abgestrahlt und ein von einem Meßobjekt reflektierter Anteil des Signals empfangen wird,
- bei dem das empfangene Signal mit dem erzeugten Signal zu einem Meßsignal gemischt wird,
- bei dem das erzeugte Signal mit einem dazu zeitlich verzögerten Signal zu einem Referenzsignal gemischt wird,
- bei dem die Frequenzkennlinie des Referenzsignales in Abhängigkeit von der Zeit für beliebig vorgegebene Meßobjektabstände ermittelt wird und
- bei dem diese Frequenzkennlinien mit einem Meßsignal verglichen werden und durch Korrelation oder Auswertung nach dem kleinsten Fehlerquadrat der Meßobjektabstand bester Übereinstimmung bestimmt wird.

6. Verfahren zur Abstandsmessung,

- bei dem ein frequenzmoduliertes Signal erzeugt wird,
- bei dem das erzeugte Signal abgestrahlt und ein von einem Meßobjekt reflektierter Anteil des Signals empfangen wird,
- bei dem das empfangene Signal mit dem erzeugten Signal zu einem Meßsignal gemischt wird,
- bei dem das erzeugte Signal mit einem dazu zeitlich verzögerten Signal zu einem Referenzsignal gemischt wird,
- bei dem zu Zeitpunkten bestimmter Phasenwinkel des Referenzsignals ein Meßsignal abgetastet wird,
- bei dem die abgetasteten Werte digitalisiert und mit den Zeitpunkten des Auftretens der Abtastwerte gespeichert werden und
- bei dem durch Auslesen der Werte mit konstanter Taktrate ein Signal gewonnen wird, das sich bei einer linearen Frequenzmodulation ergeben hätte.

7. Verfahren zur Abstandsmessung,

- bei dem ein frequenzmoduliertes Signal erzeugt wird,
- bei dem das erzeugte Signal abgestrahlt und ein von einem Meßobjekt reflektierter Anteil des Signals empfangen wird,
- bei dem das empfangene Signal mit dem erzeugten Signal zu einem Meßsignal gemischt wird,
- bei dem das erzeugte Signal mit einem dazu zeitlich verzögerten Signal zu einem Referenzsignal gemischt wird,

- bei dem das Meßsignal und das Referenzsignal mit konstanter Abtastrate erfaßt und gespeichert werden,
- bei dem Zeitpunkte mit vorgegebenen Phasenwinkeln des Referenzsignales berechnet werden,
- bei dem zu diesen Zeitpunkten die dazugehörigen Werte des Meßsignales ermittelt werden und
- bei dem durch Auslesen der Werte mit konstanter Taktrate ein Signal gewonnen wird, das sich bei einer linearen Frequenzmodulation ergeben hätte.

## Claims

1. Apparatus for distance measurement,

   - in which a signal source (SQ) is provided for producing a frequency-modulated signal,
   - in which a transmitting/receiving stage (SES) and a first mixer (MI1) are provided,
   - in which this first mixer is arranged such that it can mix a signal coming from the transmitting/ receiving stage with the signal produced by the signal source,
   - in which a reference unit (REF) is provided which comprises a surface-acoustic wave component (SAW) and a second mixer (MI2) and is intended for the purpose of delaying in time the signal coming from the signal source and of mixing this signal with the undelayed signal,
   - in which an evaluation unit (AE) is provided which is arranged such that it is supplied with the signals formed by the mixers, and
   - in which this evaluation unit is suitable for the purpose of,
   - a) using the signal originating from the second mixer to determine the frequency characteristic of this signal as a function of the time for any predetermined measurement object distances, and
   - b) comparing these frequency characteristics with a signal originating from the first mixer in order, by correlation or evaluation using the least-squares error method, to determine the measurement object distance providing the best match.

2. Apparatus for distance measurement,

   - in which a signal source (SQ) is provided for producing a frequency-modulated signal,
   - in which a transmitting/receiving stage (SES) and a first mixer (MI1) are provided,
   - in which this first mixer is arranged such that it can mix a signal coming from the transmitting/receiving stage with the signal produced by the signal source,
   - in which a reference unit (REF) is provided which comprises a surface-acoustic wave component (SAW) and a second mixer (MI2) and is intended for the purpose of delaying in time the signal coming from the signal source and of mixing this signal with the undelayed signal,
   - in which an evaluation unit (AE) is provided which is arranged such that it is supplied with the signals formed by the mixers, and
   - in which this evaluation unit is suitable for the purpose of,
   - a) sampling a signal originating from the first mixer, at times when the signal originating from the second mixer has a specific phase angle,
   - b) digitizing the sampled values and storing them with the times when the samples occur, and
   - c) reading the values at a constant clock rate in order to obtain a signal which would have resulted from linear frequency modulation.

3. Apparatus for distance measurement,

   - in which a signal source (SQ) is provided for producing a frequency-modulated signal,
   - in which a transmitting/receiving stage (SES) and a first mixer (MI1) are provided,
   - in which this first mixer is arranged such that it can mix a signal coming from the transmitting/ receiving stage with the signal produced by the signal source,
   - in which a reference unit (REF) is provided which comprises a surface-acoustic wave component (SAW) and a second mixer (MI2) and is intended for the purpose of delaying in time the signal coming from the signal source and of mixing this signal with the undelayed signal,
   - in which an evaluation unit (AE) is provided which is arranged such that it is supplied with the signals formed by the mixers, and
   - in which this evaluation unit is suitable for the purpose of,
   - a) detecting and storing the signals originating from the mixers, at a constant sampling rate,
   - b) calculating times when the signal originating from the second mixer has predetermined phase angles,
   - c) for these times, determining the associated values of the signal originating from the first mixer, and
   - d) reading the values at a constant clock rate in order to obtain a signal which would have resulted from linear frequency modulation.

4. Apparatus according to one of Claims 1 to 3,

in which a local oscillator (LO) and a further mixer (MIL) are provided between the signal source and the transmitting/receiving stage,
in which the local oscillator produces a signal at a frequency which is higher than the frequency originating from the signal source, and
in which the further mixer is intended for the purpose of mixing the signal from the signal source with the signal from the local oscillator.

5. Method for distance measurement,

- in which a frequency-modulated signal is produced,
- in which the signal which is produced is transmitted and a proportion of the signal reflected from a measurement object is received,
- in which the received signal is mixed with the signal which is produced, to form a measurement signal,
- in which the signal which is produced is mixed with a signal delayed in time with respect to it in order to form a reference signal,
- in which the frequency characteristic of the reference signal is determined as a function of the time for any predetermined measurement object distances, and
- in which these frequency characteristics are compared with a measurement signal, and the measurement object distance with the best match is determined by correlation or evaluation using the least-squares error method.

6. Method for distance measurement,

- in which a frequency-modulated signal is produced,
- in which the signal which is produced is transmitted and a proportion of the signal reflected from a measurement object is received,
- in which the received signal is mixed with the signal which is produced, to form a measurement signal,
- in which the signal which is produced is mixed with a signal delayed in time with respect to it in order to form a reference signal,
- in which a measurement signal is sampled at times when the reference signal has a specific phase angle,
- in which the sampled values are digitized and are stored with the times when the samples occur, and
- in which the values are read at a constant clock rate in order to obtain a signal which would have resulted from linear frequency modulation.

7. Method for distance measurement,

- in which a frequency-modulated signal is produced,
- in which the signal which is produced is transmitted and a proportion of the signal reflected from a measurement object is received,
- in which the received signal is mixed with the signal which is produced, to form a measurement signal,
- in which the signal which is produced is mixed with a signal delayed in time with respect to it in order to form a reference signal,
- in which the measurement signal and the reference signal are detected and stored at a constant sampling rate,
- in which times when the reference signal is at predetermined phase angles are calculated,
- in which, at these times, the associated values of the measurement signal are determined, and
- in which the values are read at a constant clock rate in order to obtain a signal which would have resulted from linear frequency modulation.

**Revendications**

1. Dispositif de télémétrie,

- comprenant une source de signal (SQ) pour produire un signal à modulation de fréquence,
- comprenant un étage émission-réception (SES) et un premier mélangeur (MI1),
- ce premier mélangeur étant disposé de manière à pouvoir mélanger un signal provenant de l'étage émission-réception avec le signal produit par la source de signal,
- comprenant une unité de référence (REF) avec un élément à ondes de surface (OFW) et un second mélangeur (MI2), qui est destinée à retarder le signal provenant de la source de signal et à le mélanger avec le signal non retardé,
- comprenant une unité d'évaluation (AE) disposée de manière à pouvoir y amener les signaux formés par les mélangeurs,
- cette unité d'évaluation étant adaptée
- a) à déterminer, à partir du signal provenant du second mélangeur, la caractéristique de fréquence de celui-ci en fonction du temps, pour des distances prédéfinies quelconques par rapport à un objet de mesure et,
- b) à déterminer par corrélation ou évaluation par les moindres carrés, en comparant ces caractéristiques de fréquence avec un signal provenant du premier mélangeur, la distance par rapport à l'objet de mesure, qui présente la correspondance optimale.

2. Dispositif de télémétrie,

- comprenant une source de signal (SQ) pour produire un signal à modulation de fréquence,
- comprenant un étage émission-réception (SES) et un premier mélangeur (MI1),
- ce premier mélangeur étant disposé de manière à pouvoir mélanger un signal provenant de l'étage émission-réception avec le signal produit par la source de signal,
- comprenant une unité de référence (REF) avec un élément à ondes de surface (OFW) et un second mélangeur (MI2), qui est destinée à retarder le signal provenant de la source de signal et à le mélanger avec le signal non retardé,
- comprenant une unité d'évaluation (AE) disposée de manière à pouvoir y amener les signaux formés par les mélangeurs,
- cette unité d'évaluation étant adaptée
- a) à balayer un signal provenant du premier mélangeur à des instants de certains angles de phase du signal provenant du second mélangeur,
- b) à numériser les valeurs balayées et à les mémoriser avec les instants de l'apparition des valeurs de balayage et,
- c) à fournir, par extraction des valeurs à cadence constante, un signal qui aurait été obtenu en cas de modulation de fréquence linéaire.

3. Dispositif de télémétrie,

- comprenant une source de signal (SQ) pour produire un signal à modulation de fréquence,
- comprenant un étage émission-réception (SES) et un premier mélangeur (MI1),
- ce premier mélangeur étant disposé de manière à pouvoir mélanger un signal provenant de l'étage émission-réception avec le signal produit par la source de signal,
- comprenant une unité de référence (REF) avec un élément à ondes de surface (OFW) et un second mélangeur (MI2), qui est destinée à retarder le signal provenant de la source de signal et à le mélanger avec le signal non retardé,
- comprenant une unité d'évaluation (AE) disposée de manière à pouvoir y amener les signaux formés par les mélangeurs,
- cette unité d'évaluation étant adaptée
- a) à détecter à cadence de balayage constante les signaux provenant des mélangeurs et à les mémoriser,
- b) à calculer des instants avec des angles de phase prédéfinis du signal provenant du second mélangeur,
- c) à déterminer à ces instants les valeurs associées du signal provenant du premier mélangeur et,
- d) à fournir, par extraction des valeurs à cadence constante, un signal qui aurait été obtenu en cas de modulation de fréquence linéaire.

4. Dispositif selon l'une des revendications 1 à 3,

comprenant entre la source de signal et l'étage émission-réception un oscillateur local (LO) et un autre mélangeur (MIL),
l'oscillateur local produisant un signal de fréquence supérieure à la fréquence provenant de la source de signal,
l'autre mélangeur étant destiné à mélanger le signal de la source de signal avec le signal de l'oscillateur local.

5. Procédé de télémétrie, consistant

- à produire un signal à modulation de fréquence,
- à émettre le signal produit et à recevoir une fraction du signal réfléchie par un objet de mesure,
- à mélanger le signal reçu avec le signal produit pour en former un signal de mesure,
- à mélanger le signal produit avec un signal retardé par rapport à celui-ci pour en former un signal de référence,
- à déterminer la caractéristique de fréquence du signal de référence en fonction du temps pour des distances prédéfinies quelconques par rapport à l'objet de mesure et
- à comparer ces caractéristiques de fréquence avec un signal de mesure et à déterminer par corrélation ou évaluation par les moindres carrés la distance par rapport à l'objet de mesure qui présente la correspondance optimale.

6. Procédé de télémétrie, consistant

- à produire un signal à modulation de fréquence
- à émettre le signal produit et à recevoir une fraction du signal réfléchie par un objet de mesure,
- à mélanger le signal reçu avec le signal produit pour en former un signal de mesure,
- à mélanger le signal produit avec un signal retardé par rapport à celui-ci pour en former un signal de référence,
- à balayer un signal de mesure à des instants de certains angles de phase du signal de référence,
- à numériser les valeurs balayées et à les mémoriser avec les instants de l'apparition des valeurs de balayage et,
- à fournir, par extraction des valeurs à cadence constante, un signal qui aurait été obtenu en cas de modulation de fréquence linéaire.

7. Procédé de télémétrie, consistant

- à produire un signal à modulation de fréquence,
- à émettre le signal produit et à recevoir une fraction du signal réfléchie par un objet de mesure,
- à mélanger le signal reçu avec le signal produit pour en former un signal de mesure,
- à mélanger le signal produit avec un signal retardé par rapport à celui-ci pour en former un signal de référence,
- à détecter à cadence de balayage constante le signal de mesure et le signal de référence et à les mémoriser,
- à calculer des instants avec des angles de phase prédéfinis du signal de référence,
- à déterminer à ces instants les valeurs associées du signal de mesure et,
- à fournir, par extraction des valeurs à cadence constante, un signal qui aurait été obtenu en cas de modulation de fréquence linéaire.

# FIG 1

# FIG 2

# FIG 3